# EUROPÄISCHE PATENTSCHRIFT

(11) **EP 1 859 997 B1**
(45) Veröffentlichungstag und Bekanntmachung des Hinweises auf die Patenterteilung: **01.04.2009**
(21) Anmeldenummer: 07009523.7
(22) Anmeldetag: 11.05.2007
(51) Int. Cl.: B60R 16/02

(54) **Verfahren zur Überwachung des Schwenkraums einer Fahrzeugtür**
Method for monitoring the opening circle of a vehicle door
Procédé de surveillance de l'espace de pivotement pour une porte de véhicule

(30) Priorität: 26.05.2006 DE 102006024609
(43) Veröffentlichungstag der Anmeldung: 28.11.2007
(73) Patentinhaber: Bayerische Motoren Werke Aktiengesellschaft, 80809 München (DE)
(72) Erfinder: Wahl, Eric, 85376 Hetzenhausen (DE)

(56) Entgegenhaltungen:
- EP-A2- 1 207 262
- DE-A1-4102004 049 05
- DE-A1-1102004 053 71

## Beschreibung

Die Erfindung betrifft ein Verfahren zur Überwachung des Schwenkraums einer Fahrzeugtür an einem Kraftfahrzeug hinsichtlich des Vorhandenseins von Gefahrenobjekten, bei welchem Bilddaten einer bei dem Kraftfahrzeug angeordneten und auf einen seitlichen Umgebungsbereich des Kraftfahrzeugs ausgerichteten Kamera erfasst werden.

Aus der gattungsgemäßen DE 10312252 A1 und der DE 10232413 A1 sind kamerabasierte Vorrichtungen und Verfahren zum Verhindern einer Kollision einer schwenkbaren Fahrzeugtür eines Kraftfahrzeugs mit einem dem Kraftfahrzeug benachbarten, insbesondere im Schwenkraum einer Fahrzeugtür befindlichen, Gefahrenobjekt bekannt. Durch solche Vorrichtungen und Verfahren können Bilddaten der Fahrzeugumgebung aufgenommen und hinsichtlich des Vorhandenseins von Gegenständen in einem Schwenkraum der Fahrzeugtür analysiert werden. Bei Nutzung einer einzelnen Kamera ist ohne weitere Maßnahmen jedoch keine echte dreidimensionale Umgebungsinformation verfügbar. Erst durch eine Hinzunahme weiterer Sensordaten, insbesondere Bilddaten zumindest einer weiteren Kamera kann dreidimensionale Umgebungsinformation gewonnen werden. Dadurch entsteht jedoch ein erhöhter Hardware-Aufwand hinsichtlich der Bereitstellung weiterer Sensoren.

Aufgabe der Erfindung ist es, ein einfaches Verfahren zur Überwachung des Schwenkraums einer Fahrzeugtür zu schaffen, bei welchem das Vorhandensein von Gefahrenobjekten mit verbesserter Zuverlässigkeit festgestellt werden kann.

Diese Aufgabe wird erfindungsgemäß gelöst durch ein Verfahren gemäß Patentanspruch 1. Bevorzugte Ausführungsformen und vorteilhafte Weiterbildungen ergeben sich aus den abhängigen Patentansprüchen.

Erfindungsgemäß werden zu zumindest zwei unterschiedlichen Aufnahmezeitpunkten Bilddaten der Kamera aufgenommen. Zudem wird Bewegungsinformation des Kraftfahrzeugs zwischen den beiden Aufnahmezeitpunkten erfasst. Dies kann beispielsweise anhand von Odometriedaten des Kraftfahrzeugs geschehen oder anhand des Vergleichs der auf Basis eines satellitengestützten Positionsbestimmungssystems bestimmten Positionen zu den jeweiligen Aufnahmezeitpunkten. Auch andere Verfahren zur Erfassung der Bewegungsinformation des Kraftfahrzeugs zwischen den beiden Aufnahmezeitpunkten, etwa basierend auf Trägheitssensoren, sind denkbar. Anhand der aufgenommenen Bilddaten und der Bewegungsinformation kann nun in an sich bekannter Weise ein dreidimensionales Umgebungsmodell erstellt werden und hinsichtlich des Vorhandenseins von Gefahrenobjekten im Schwenkraum der Fahrzeugtür analysiert werden.

Unter dem Schwenkraum einer Fahrzeugtür ist dabei der Raum zu verstehen, in den beim Verschwenken der Fahrzeugtür zumindest ein Teil der Fahrzeugtür eindringt. Befindet sich kein Objekt in diesem Schwenkraum, kann die Fahrzeugtür kollisionsfrei verschwenkt werden, insbesondere geöffnet werden.

Durch die Erfindung wird eine zuverlässige Überwachung des Schwenkraums der Fahrzeugtür gewährleistet. Ein Gefahrenobjekt im Schwenkraum der Fahrzeugtür kann je nach Ausführungsform der Erfindung im jeweils erforderlichen Detaillierungsgrad erfasst werden und eine Kollision der Fahrzeugtür mit einem solchen Gefahrenobjekt kann durch geeignete Maßnahmen vermieden werden. Das erfindungsgemäße Verfahren ist technisch einfach umsetzbar. Die erforderlichen Sensoren sind in der Regel kommerziell verfügbar oder werden bereits in Kraftfahrzeugen verwendet. Die anzuwendenden Auswerteverfahren sind in anderem Zusammenhang bekannt.

Wird ein Gefahrenobjekt im Schwenkraum der Fahrzeugtür erkannt, so kann diese Erkenntnis in unterschiedlicher Art und Weise verwertet werden. Zum einen kann an eine Person, die im Begriff ist, die Fahrzeugtür zu verschwenken - erkennbar beispielsweise durch Berührung eines Türgriffs - eine entsprechende Warnung ausgegeben werden. Zum anderen kann die Verschwenkbarkeit der Fahrzeugtür etwa durch eine Türbremse gehemmt oder begrenzt werden. Eine Türbremse kann beispielsweise derart wirken, dass ein erhöhter Kraftaufwand zum Verschwenken der Fahrzeugtür erforderlich ist, wenn diese sich an ein Gefahrenobjekt annähert. Es kann auch der Bewegungsumfang einer selbsttätig durch Aktuatoren verschwenkbaren Fahrzeugtür geeignet eingeschränkt werden. Wenn ein Gefahrenobjekt im Schwenkraum der Fahrzeugtür detektiert wird, können also Maßnahmen zur Vermeidung einer Kollision zwischen der Fahrzeugtür und dem Gefahrenobjekt ergriffen werden.

Durch die prinzipbedingt erzielbare hohe Genauigkeit der Überwachung des Schwenkbereichs kann dennoch eine stark ausgeprägte Schwenkbarkeit der Fahrzeugtür in solchen Fällen erreicht werden, in welchen sich zwar ein Objekt im Schwenkraum der Fahrzeugtür befindet, dieses jedoch gemäß einer Objektklassifikation nicht als Gefahrenobjekt betrachtet werden muss. Dies gilt auch für solche Fälle, in welchen sich zwar ein Gefahrenobjekt im Schwenkraum der Fahrzeugtür befindet, ein eingeschränktes Verschwenken jedoch gefahrenfrei möglich ist, sowie für solche Fälle, in welchen sich ein Gefahrenobjekt lediglich nahe dem Schwenkraum der Fahrzeugtür befindet.

Die Erfindung macht das aus anderen technischen Bereichen bekannte Prinzip "motion stereo" bzw. "stereo-by-motion" in besonders vorteilhafter Form für die Überwachung des Schwenkraums einer Fahrzeugtür nutzbar.

Insbesondere basiert die Erfindung auf dem Gedanken, bereits bei bewegtem Kraftfahrzeug und somit bereits vor dem Öffnen bzw. Verschwenken der Fahrzeugtür zumindest einen Teil der Bilddaten zu erfassen, anhand derer das Vorhandensein und ggf. die Anordnung und/oder Form von Gefahrenobjekten im Schwenkraum der Fahrzeugtür schließlich beurteilt wird. In der Regel reicht eine einzige Kamera aus, um das erfindungsgemäße Verfahren durchzuführen. Außerdem kann der Rechenaufwand der an dem erfindungsgemäßen Verfahren beteiligten Komponenten gering gehalten werden.

Bekannte gattungsgemäße Verfahren und Vorrichtungen nutzen nicht die Bilddaten unterschiedlicher Aufnahmezeitpunkte für die Überwachung des Schwenkraums. In der Regel wird eine Erfassung von Bilddaten erst angestoßen, wenn diese durch Anzeichen einer bevorstehenden Türöffnung, beispielsweise bei Berührung eines Türgriffs, angebracht erscheint. Spätestens wenn das Kraftfahrzeug zum Stehen gekommen ist, was in der Regel vor den ersten Anzeichen einer bevorstehenden Türöffnung geschieht, besteht jedoch lediglich noch die Möglichkeit einer Momentbetrachtung. Außerdem ist in diesem Fall für eine schnelle Reaktion eine hohe Leistungsfähigkeit der beteiligten Komponenten zu gewährleisten. Ansonsten können Verzögerungen entstehen, die zur Folge haben können, dass eine potenzielle Gefahrenquelle zu spät erkannt wird.

Die Erfindung behebt diese Nachteile, indem wesentliche Umfelddaten bereits bei bewegtem Fahrzeug erfasst werden. Dieses technische Merkmal ist mit anderer technischer Zielsetzung und in ganz anderer technischer Ausprägung aus dem Stand der Technik bekannt. Die EP 1 207 262 B1 beschreibt ein Fahrzeug mit wenigstens einer schwenkbaren Tür und mit einer Einrichtung zum Verhindern einer Kollision der Tür mit einem dem Fahrzeug benachbarten Gegenstand während des Öffnens der Tür, wobei ein Sensor mit nachgeschalteter Auswertelogik während einer dem Öffnen der Tür unmittelbar vorausgehenden Fahrzeugbewegung den Gegenstand in seiner Lage und in seiner Lageänderung relativ zum Fahrzeug erfasst. Die Bewegung des Fahrzeugs wird dabei aber nur in dem Sinne ausgenutzt, dass der faktische Messbereich des Sensors vergrößert bzw. verlagert wird. Daraus ergibt sich ein waagrechter sensorischer Schnitt durch die Umgebung. Die Fahrzeugbewegung dient bei einem solchen Verfahren aber nicht - wie bei der Erfindung - zur Erzeugung eines dreidimensionalen Umgebungsmodells aus zweidimensionalen Bilddaten.

Das erfindungsgemäß erzeugte dreidimensionale Umgebungsmodell kann im einfachsten Fall als "Punktwolke" ausgebildet sein. Die Sensordaten bzw. Modelldaten bleiben also abstrakt, es wird keine Objektklassifikation vorgenommen. Eine Überwachung des Schwenkraums der Fahrzeugtür kann beispielsweise dadurch erfolgen, dass überprüft wird, ob sich zumindest ein Punkt der Punktwolke in dem Schwenkraum befindet.

Gemäß einer bevorzugten Ausführungsform der vorliegenden Erfindung werden die Sensordaten bzw. Modelldaten im Rahmen einer Objektdetektion und ggf. Objektklassifikation weiterverarbeitet. Potenzielle Gefahrenobjekte in der Umgebung des Kraftfahrzeugs werden dann in an sich bekannter Weise - etwa auf der Basis einer so genannten Segmentierung - erkannt und für erkannte Objekte werden zumindest deren wesentliche geometrische Abmessungen und ihre Anordnung bezüglich des Kraftfahrzeugs bzw. der Fahrzeugtür bestimmt. Eine Überwachung des Schwenkraums der Fahrzeugtür kann beispielsweise durch eine herkömmliche Kollisionsdetektion für dreidimensionale geometrische Modelle erfolgen.

Vorzugsweise wird auch die Art eines erkannten Objekts bestimmt. Beispielsweise kann ein anderes Kraftfahrzeug - etwa anhand charakteristischer Abmessungen - als Kraftfahrzeug erkannt werden. Aus der Art des Objekts können Rückschlüsse auf das von dem Objekt ausgehende Gefahrenpotenzial gezogen werden. Beispielsweise kann anhand der Art des Objekts dessen Nachgiebigkeit abgeschätzt werden. So kann eine Türöffnung durch geeignete Maßnahmen verhindert oder eingeschränkt werden, wenn sich ein anderes Fahrzeug, eine Hausmauer, ein Verkehrspoller oder ein ähnliches unnachgiebiges Objekt im Schwenkraum der Fahrzeugtür befindet. Hingegen kann eine Türöffnung zugelassen werden, wenn ein erkanntes Objekt als nachgiebiges Gebüsch klassifiziert wird.

Es kann also anhand der aufgenommenen Bilddaten und/oder anhand von Modelldaten des dreidimensionalen Umgebungsmodells eine Objektklassifikation von Objekten in der Umgebung des Kraftfahrzeugs, insbesondere im Schwenkraum der Fahrzeugtür, durchgeführt werden und in Abhängigkeit vom Ergebnis der Objektklassifikation können Maßnahmen zum Schutz der Fahrzeugtür ergriffen werden.

Ein wesentliches Element der Erfindung stellt die Erfassung von Bilddaten zu zumindest zwei unterschiedlichen Aufnahmezeitpunkten dar.

Im Folgenden wird ohne Beschränkung der Allgemeinheit der Fall beschrieben, dass für die Bildaufnahme eine einzige Kamera verwendet wird und dass genau zwei Bilddatensätze, d.h. ein erster und ein zweiter Bilddatensatz, für die erfindungsgemäße Erstellung des dreidimensionalen Umgebungsmodells verwendet werden. Das erfindungsgemäße Verfahren ist auf dieser Basis grundsätzlich durchführbar. Verfeinerungen bzw. Verbesserungen oder Vereinfachungen des Verfahrens durch die Nutzung weiterer Kameras oder weiterer Bilddatensätze sind jedoch ebenfalls im allgemeinen Gedanken der Erfindung eingeschlossen.

Vorzugsweise, jedoch nicht notwendigerweise, ist die Kamera auf den Schwenkraum der Fahrzeugtür ausgerichtet. Die Aufnahme des zweiten Bilddatensatzes kann dann bei bereits stehendem Fahrzeug erfolgen. Sie kann ausgelöst werden durch ein charakteristisches Anzeichen für den Stillstand des Fahrzeugs - etwa die Messung der Fahrgeschwindigkeit Null. Die Aufnahme kann aber auch erst ausgelöst werden, wenn eine bevorstehende Türöffnung, beispielsweise durch einen Berührungssensor am Türgriff, detektiert wird. Eine frühere Auslösung hat jedoch den Vorteil, dass das dreidimensionale Umgebungsmodell bereits errechnet und die Überwachung des Schwenkraums gestartet werden kann, bevor die Fahrzeugtür tatsächlich verschwenkt wird.

Schwieriger als die Wahl des zweiten Aufnahmezeitpunktes ist die Wahl des ersten Aufnahmezeitpunktes. Die Erfassung des ersten Bilddatensatzes kann ausgelöst werden durch zumindest ein charakteristisches Anzeichen für ein bevorstehendes Anhalten des Kraftfahrzeugs, beispielsweise das Unterschreiten einer bestimmten Fahrgeschwindigkeit. Auf diese Weise kann gewährleistet werden, dass der erste Bilddatensatz bereits zur Verfügung steht, wenn das Fahrzeug tatsächlich zum Stillstand kommt.

Auch die Aufnahme des zweiten Bilddatensatzes kann durch ein charakteristisches Anzeichen für ein bevorstehendes Anhalten des Kraftfahrzeugs ausgelöst werden - typischerweise durch das Unterschreiten einer Geschwindigkeitsschwelle, die geringer ist als diejenige, durch deren Unterschreiten beispielsweise die Aufnahme des ersten Bilddatensatzes ausgelöst wird. Es stehen dann bereits vor dem tatsächlichen Anhalten des Kraftfahrzeuges beide benötigten Bilddatensätze zur Verfügung und die Überwachung des Schwenkraums kann beginnen. Auf diese Weise kann die Funktion des erfindungsgemäßen Verfahrens auch für den Fall sichergestellt werden, dass die Fahrzeugtür bereits vor dem Anhalten des Kraftfahrzeugs geöffnet wird.

Eine Aufnahme des zweiten Bilddatensatzes vor dem Stillstand des Kraftfahrzeugs kann auch und insbesondere dann vorteilhaft sein, wenn die verwendete Kamera nicht auf den zu überwachenden Schwenkraum der Fahrzeugtür ausgerichtet ist. Dies kann insbesondere dann der Fall sein, wenn die Kamera vorderhalb der Fahrzeugtür am Kraftfahrzeug angeordnet ist. Durch eine geeignete Wahl des Aufnahmezeitpunktes vor dem Stillstand des Kraftfahrzeugs kann jedoch auch in diesem Fall ein geeigneter zweiter Bilddatensatz bereitgestellt werden. Die Erfindung eröffnet also gegenüber dem Stand der Technik große Freiheiten hinsichtlich der Anordnung der verwendeten Kamera bezüglich der zu überwachenden Fahrzeugtür.

Vorzugsweise ist das erfindungsgemäße Verfahren derart ausgeführt, dass das dreidimensionale Umgebungsmodell anhand zweier Bilddatensätze mit variabler Stereobasis erzeugt werden kann, sofern die Stereobasis bekannt ist. Dies ermöglicht eine spezielle Ausführungsform der Erfindung, bei der nur diejenigen beiden Bilddatensätze aufgenommen und/oder gespeichert und/oder verarbeitet werden, die auch tatsächlich für die Erstellung des Umgebungsmodells benötigt werden.

Unter der Stereobasis ist dabei die räumliche Distanz zwischen den Aufnahmeorten des ersten und des zweiten Bilddatensatzes zu verstehen. Gegebenenfalls kann der Begriff der Stereobasis neben dieser Distanz zusätzlich auch die jeweilige Kameraausrichtung beinhalten. Da erfindungsgemäß Bewegungsinformation des Kraftfahrzeugs zwischen den beiden Aufnahmezeitpunkten erfasst wird, kann die Stereobasis, zumindest die oben genannte Distanz, aus dieser Bewegungsinformation bestimmt werden und steht für das anschließende Modellbildungsverfahren zur Verfügung. Vorzugsweise ist auch die Ausrichtung der Kamera bestimmbar. Hierzu kann beispielsweise der Lenkwinkel des Kraftfahrzeugs, an welches die Kamera typischerweise fest montiert ist, ausgewertet werden. Ein Maß für den Lenkwinkel des Kraftfahrzeugs ist bei vielen Kraftfahrzeugen ohne Mehraufwand auf einem Datenbus, z. B. CAN-Bus, verfügbar.

Es kann vorteilhaft sein, wenn die Distanz zwischen den Aufnahmeorten des ersten und des zweiten Bilddatensatzes einen bestimmten vorgegebenen Wert besitzt oder zumindest in einem bestimmten vorgegebenen Werteintervall liegt. Dies ist schwierig zu gewährleisten, wenn der Aufnahmeort des zweiten Bilddatensatzes nicht bekannt ist - beispielsweise weil der zweite Bilddatensatz im Moment des Stillstands des Kraftfahrzeugs aufgenommen werden soll, jedoch vor Stillstand des Kraftfahrzeugs nicht bekannt ist, wann und wo das Kraftfahrzeug zum Stillstand kommen wird. Insbesondere für diesen Fall kann es vorteilhaft sein, wenn zunächst zu verschiedenen Zeitpunkten - und somit an verschiedenen Aufnahmeorten - Bilddaten aufgenommen und zwischengespeichert werden und später auswählbar ist, welcher der zwischengespeicherten Bilddatensätze als erster Bilddatensatz verwendet wird. Sobald der zweite Bilddatensatz - und somit sein Aufnahmeort - feststeht, kann derjenige Bilddatensatz aus dem Zwischenspeicher ausgewählt werden, dessen Aufnahmeort die erforderliche Stereobasis zum Aufnahmeort des zweiten Bilddatensatzes aufweist. Somit kann grundsätzlich für jeden Anhalteort des Kraftfahrzeugs eine Analyse des Schwenkraums der Fahrzeugtür angestellt werden.

Durch eine Zwischenspeicherung von an verschiedenen Aufnahmeorten aufgenommenen Bilddatensätzen und die spätere Auswahl eines geeigneten zwischengespeicherten Bilddatensatzes können permanent vergangene Bilddaten bereitgestellt werden. Somit können nicht nur die oben genannten, sondern nahezu beliebige Anforderungen an den Aufnahmeort eines Bilddatensatzes erfüllt werden. Die aufnehmende Kamera muss sich lediglich in der Vergangenheit am jeweiligen Ort befunden haben. Vorzugsweise wird der Abstand der Aufnahmeorte zwischengespeicherter Bilddatensätze danach bemessen, welche Anforderungen an den Aufnahmeort des später auszuwählenden Bilddatensatzes gestellt werden.

Zwischengespeicherte Bilddatensätze, deren Aufnahmeort einen vorgeschriebenen Definitionsbereich verlässt, können automatisch freigegeben oder gelöscht werden. Auf diese Weise kann der vorzuhaltende Datenbestand selbst bei dicht aufeinanderfolgend aufgenommenen zwischengespeicherten Bilddatensätzen gering gehalten werden.

Die Zwischenspeicherung kann beispielsweise in einem Ringpuffer erfolgen. Das Verfahren kann dann in einer programmtechnisch sehr einfach umsetzbaren Schleife ablaufen und der Zwischenspeicher kann sehr einfach ständig aktualisiert werden.

Wie oben erwähnt, kann es vorteilhaft bzw. sogar erforderlich sein, auch den zweiten Bilddatensatz vor Stillstand des Kraftfahrzeugs aufzunehmen. Das Problem, dass in der Regel nicht bekannt ist, wo das Fahrzeug zum Stillstand kommen wird bzw. wann und wo die Fahrzeugtür geöffnet werden soll, kann insofern auch die Aufnahme des zweiten Bilddatensatzes betreffen. Gemäß einer bevorzugten Ausführungsform der vorliegenden Erfindung werden daher auch im Hinblick auf die Bereitstellung des zweiten Bilddatensatzes zunächst zu verschiedenen Zeitpunkten - und somit an verschiedenen Aufnahmeorten - Bilddaten aufgenommen und zwischengespeichert, wobei später auswählbar ist, welcher der zwischengespeicherten Bilddatensätze als zweiter Bilddatensatz verwendet wird.

Sofern vorab mehrere Bilddatensätze aufgenommen werden, aus denen später der erste und/oder der zweite Bilddatensatz für das erfindungsgemäße Verfahren ausgewählt wird, ist den vorab aufgenommenen Bilddatensätzen vorzugsweise Positionsinformation, insbesondere der Aufnahmeort, zuordenbar. Vorzugsweise wird solche Positionsinformation bei einer eventuellen Zwischenspeicherung gemeinsam mit den Bilddatensätzen abgespeichert. Dadurch wird eine Bestimmung der Stereobasis zwischen dem ersten und dem zweiten Bilddatensatz erleichtert bzw. erst ermöglicht. Die Positionsinformation ist auch hilfreich bzw. erforderlich, wenn die Kamera nicht auf den Schwenkraum ausgerichtet ist.

Sofern vorab mehrere Bilddatensätze aufgenommen werden, aus denen später sowohl der erste als auch der zweite Bilddatensatz für das erfindungsgemäße Verfahren ausgewählt wird, stehen vorzugsweise dieselben Bilddatensätze für die Auswahl sowohl des ersten als auch des zweiten Bilddatensatzes zur Verfügung. Beispielsweise muss dann gegebenenfalls nur ein einziger Ringpuffer für die Zwischenspeicherung vorgesehen werden.

Die Erfindung geht grundsätzlich von einer statischen Umgebung des Kraftfahrzeuges aus. Die Erfindung lässt sich jedoch auf die Erfassung und Berücksichtigung der Bewegung von Objekten in der Umgebung des Kraftfahrzeuges erweitern. Gemäß einer Weiterbildung der Erfindung wird die Bewegung bewegter Objekte in der Umgebung des Kraftfahrzeuges anhand des optischen Flusses der entsprechenden Bildpunkte bzw. Modellpunkte abgeschätzt. Das Umgebungsmodell kann dann entsprechend der Bewegungsschätzung laufend aktualisiert werden und eventuelle Maßnahmen zum Schutz der Fahrzeugtür können entsprechend angepasst werden.

Beispielsweise kann die Fahrzeugtür dementsprechend auch dann blockiert werden, wenn der Schwenkraum zwar momentan frei ist, jedoch ein Gefahrenobjekt, beispielsweise ein anderes Kraftfahrzeug, sich auf diesen zu bewegt. Im umgekehrten Fall kann eine Fahrzeugtür zunächst blockiert werden, jedoch freigegeben werden, wenn ein Gefahrenobjekt den Schwenkraum verlassen hat.

Zudem kann die Verwendung bzw. Auswertung des optischen Flusses die Gewinnung von Tiefeninformationen selbst dann ermöglichen, wenn sich die Position des Fahrzeugs nicht mehr verändert, d. h. wenn die Aufnahmeorte der verwendeten Bilddatensätze identisch sind bzw. nur ein sehr geringer räumlicher Versatz besteht. Entsprechende Verfahren sind in anderem Zusammenhang aus dem Stand der Technik bekannt.

Alternativ oder zusätzlich zu einer Auswertung des optischen Flusses kann zur Erfassung veränderter Umgebungsverhältnisse insbesondere der zweite Bilddatensatz zu einem späteren Zeitpunkt neu aufgenommen werden und eine neue Modellbildung durchgeführt werden.

Gemäß einer bevorzugten Ausführungsform der Erfindung ist die Kamera schwenkbar am Kraftfahrzeug angeordnet. Die Freiheit bezüglich der Wahl der Aufnahmezeitpunkte und bezüglich des Anbringungsortes der Kamera am Kraftfahrzeug wird dadurch erheblich erhöht. Dies gilt selbst dann, wenn die Aufnahme des zweiten Bilddatensatzes bei stehendem Kraftfahrzeug erfolgen soll.

Die vorangehenden Ausführungen beziehen sich - ohne Beschränkung der Allgemeinheit - auf den Fall beschrieben, dass genau zwei Bilddatensätze für die erfindungsgemäße Erstellung des dreidimensionalen Umgebungsmodells verwendet werden. Gemäß einer besonders vorteilhaften Ausführungsform der Erfindung werden jedoch abweichend hiervon mehr als zwei Bilddatensätze aufgenommen und ausgewertet. Insbesondere kann es vorteilhaft sein, mit einer ganzen Sequenz von Bilddatensätzen zu arbeiten.

Die Verwendung von mehr als zwei Bilddatensätzen ist insbesondere deshalb vorteilhaft, da an die bereitzustellenden Bilddaten häufig konkurrierende Anforderungen zu stellen sind, die durch nur zwei Bilddatensätze kaum bzw. nur schwer zu erfüllen sind. Zum einen sollte die Distanz zwischen den Aufnahmeorten zumindest eines Teils der verwendeten Bilddatensätze nicht zu groß sein. Der Grund hierfür ist, dass bei großen Stereobasen ein Korrespondenzproblem entsteht, bei dem es nur noch eingeschränkt möglich ist, zu jedem Bildpunkt des ersten Bildes auch noch einen Bildpunkt im zweiten Bild zu finden. Dem Verfahren sollten also benachbarte Bilder zur Verfügung stehen, deren Aufnahmeorte so dicht beieinander liegen, dass sich eine große Anzahl gemeinsamer Bildpunkte ergibt. Das Korrespondenzproblem beinhaltet außerdem den Umstand, dass bestimmte Raumpunkte nur von einer Betrachterposition aus gesehen werden können und daher nicht alle Pixel eines Bildes in einem anderen gefunden werden können. Zuletzt bezieht sich Korrespondenz immer auf einen Bildbereich, der zumindest so viele Merkmale besitzt, dass er sich in einem zweiten Bild wieder finden lässt. Daher sind beispielsweise Flächen ohne Struktur (z.B.: weiße Wand) nur schwer mit reinen Stereoverfahren abzubilden. Als zu den vorhergehenden Ausführungen konkurrierende Anforderung sollten dem Verfahren zum anderen Bilder zur Verfügung stehen, deren Aufnahmeorte einen großen Abstand voneinander besitzen, um ausreichende bzw. gute Tiefeninformation gewinnen zu können.

Des weiteren ist bei der Bildaufnahme unter Umständen mit Abschattungen zu rechnen. Durch die Redundanzen in einer Sequenz können die negativen Auswirkungen solcher Abschattungen deutlich reduziert werden. Beispielsweise können aufgenommene Bilder zunächst in einer Vorverarbeitung verglichen und/oder einzeln bewertet werden. Anschließend können unbrauchbare Bilder verworfen werden. Abschattungen entstehen immer dann, wenn ein Objekt die Sicht auf das Dahinterliegende verbirgt. Der abgeschattete Bereich hängt dementsprechend immer von der Betrachterposition ab. Bei möglichst vielen Betrachterpositionen steigt die Wahrscheinlichkeit, dass ein Punkt in der Umgebung zumindest einmal gesehen wird und die Abschattung damit verschwindet. Auch deshalb kann die Verwendung von mehr als zwei Bilddatensätzen, insbesondere die Verwendung einer ganzen Sequenz dicht aufeinanderfolgend aufgenommener Bilddatensätze, vorteilhaft sein.

Anhand der beigefügten Zeichnungen wird im Folgenden ein Ausführungsbeispiel für die Erfindung beschrieben, welches weitere vorteilhafte Ausführungsformen und Weiterbildungen der Erfindung aufzeigt. Dabei zeigen jeweils schematisch
- Fig. 1: eine Draufsicht auf eine Kraftfahrzeugtür, deren Schwenkraum erfindungsgemäß überwacht wird, und
- Fig. 2: den Aufnahmeort verwendeter Kamerabilder bezüglich des Schwenkraums.

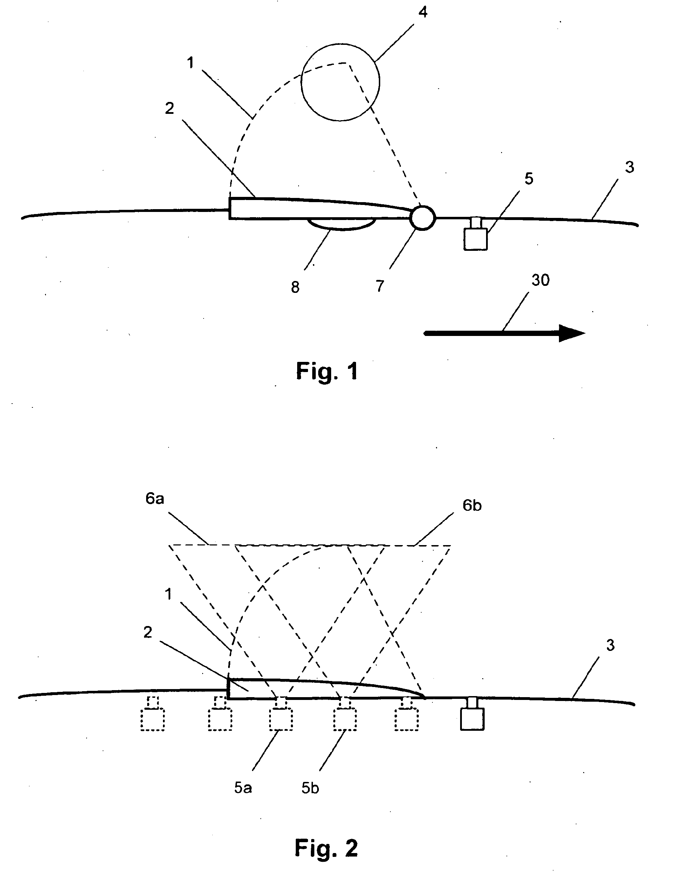

Der Schwenkraum 1 einer seitlichen Fahrzeugtür 2 an einem Kraftfahrzeug 3 soll durch ein erfindungsgemäßes Verfahren hinsichtlich des Vorhandenseins von Gefahrenobjekten 4 überwacht werden. Fig. 1 zeigt schematisch eine Draufsicht auf die Kraftfahrzeugtür 2 und deren zu überwachenden Schwenkraum 1.

Das Kraftfahrzeug 3 weist eine Kamera 5 auf, die lateral senkrecht zur Fahrzeuglängsachse angebracht ist. Die Kamera kann beispielsweise zur Vermessung von Parklücken verwendet werden. Im vorliegenden Beispiel wird die Kamera 5 zudem zur Überwachung des Schwenkraums 1 der Fahrzeugtür 2 verwendet.

Die geometrischen Maße des Schwenkraums 1 bezüglich des Kraftfahrzeugs 3 sind bekannt. Ebenso ist die Position der Kamera 5 bezüglich des Kraftfahrzeugs und somit bezüglich des Schwenkraums 1 bekannt.

In Fig. 1 ist erkennbar, dass die Kamera 5 im vorliegenden Beispiel vorderhalb der Fahrzeugtür 2 an dem Kraftfahrzeug 3 angeordnet ist. Abweichend hiervon kann die Kamera alternativ selbstverständlich auch an der Fahrzeugtür 2 selbst, unterhalb oder oberhalb derselben angeordnet sein. Bei entsprechender Ausrichtung auf den Schwenkraum 1 ist selbst eine Anordnung hinterhalb der Fahrzeugtür 2 möglich.

Bei langsamer Fahrt des Kraftfahrzeugs 3 (beispielsweise < 10 km/h) in Richtung des Pfeils 30 werden zyklisch Bilder durch die Kamera 5 aufgenommen. Die aufgenommenen Bilder werden in einem (nicht eigens bildlich dargestellten) Ringpuffer zwischengespeichert, der so ausreichend dimensioniert ist, dass stets Bilder zur Verfügung stehen, die über eine Fahrstrecke von mehreren Metern aufgenommen wurden. Es stehen somit auch stets Kamerabilder zur Verfügung, die den Schwenkraum 1 der Tür 2 zumindest teilweise umfassen. Um dies zu gewährleisten, kann bei sehr langsamer Fahrt die Aufnahmefrequenz verringert werden. Jedem Bild im Ringpuffer ist ein Zeitstempel zugeordnet, der seinen Aufnahmezeitpunkt kennzeichnet.

Das Kraftfahrzeug 3 verfügt über geeignete Odometriesensoren, die eine exakte Bestimmung der Position des Kraftfahrzeugs über der Zeit erlauben. Die Kamera 5 ist fest am Kraftfahrzeug 3 angeordnet. Demnach lässt sich auch der exakte Verlauf der Position der Kamera 5 über der Zeit bestimmen. Dieser Verlauf wird in einer Speichereinheit protokolliert.

Die Überwachung des Schwenkraums 1 soll durchgeführt werden, wenn das Fahrzeug 3 steht. Aufgrund des protokollierten Positionsverlaufs des Kraftfahrzeugs und des Zeitstempels der im Ringpuffer gespeicherten Bilder kann jedem Bild im Ringpuffer ein Aufnahmeort, nämlich die Position der Kamera 5 zum entsprechenden Zeitpunkt, bezüglich des Schwenkraums 1 bei stehendem Kraftfahrzeug zugeordnet werden.

Fig. 2 zeigt die Aufnahmeorte verschiedener im Ringpuffer enthaltener Bilder bezüglich des Schwenkraums 1. Die Aufnahmeorte werden dabei durch Kamerasymbole repräsentiert.

Die Überwachung des Schwenkraums 1 basiert auf einem dreidimensionalen Umgebungsmodell. Dieses Umgebungsmodell wird erstellt aus zwei Bildern 6a und 6b. Die Bilder 6a und 6b müssen für eine korrekte Funktion des Verfahrens einen geeigneten seitlichen Versatz zueinander (Stereobasis) haben. Außerdem müssen die beiden Bilder 6a und 6b den Schwenkraum 1 in geeignetem Maße abdecken. Nach diesen geometrischen Überlegungen werden zwei geeignete Bilder 6a und 6b anhand der wie oben beschrieben zugeordneten Aufnahmeorte 5a und 5b aus den im Ringpuffer vorgehaltenen Bildern ausgewählt.

Das aus den Bildern 6a und 6b erstellte dreidimensionale Umgebungsmodell wird im vorliegenden Beispiel als Punktwolke erstellt. Liegt zumindest ein Punkt der Punktwolke im Schwenkraum 1 der Fahrzeugtür 2, so wird diese bei dem Versuch eines Insassen, die Tür zu öffnen, blockiert. Hierzu kann eine Türbremse 7 vorgesehen werden. Der Versuch des Öffnens kann durch einen Türgriffsensor 8 detektiert werden.

Erkannte Gefahrenobjekte können außerdem durch eine Anzeigeeinheit im Fahrzeuginneren visualisiert werden. Zusätzlich können Systeme verbaut werden, die durch Warntöne und Vibrationen im Türgriff vor erkannten Gefahren warnen.

## Patentansprüche

1. Verfahren zur Überwachung des Schwenkraums einer Fahrzeugtür (2) an einem Kraftfahrzeug (3) hinsichtlich des Vorhandenseins von Gefahrenobjekten (4), bei welchem Bilddaten einer bei dem Kraftfahrzeug angeordneten und auf einen seitlichen Umgebungsbereich des Kraftfahrzeugs ausgerichteten Kamera (5) erfasst werden,
**dadurch gekennzeichnet,**
**dass** zu zumindest zwei unterschiedlichen Aufnahmezeitpunkten Bilddaten der Kamera (5) aufgenommen werden,
**dass** Bewegungsinformation (5,5a,5b) des Kraftfahrzeugs (3) zwischen den beiden Aufnahmezeitpunkten erfasst wird und
**dass** anhand der aufgenommenen Bilddaten (6a,6b) und der Bewegungsinformation ein dreidimensionales Umgebungsmodell erstellt und hinsichtlich des Vorhandenseins von Gefahrenobjekten im Schwenkraum der Fahrzeugtür analysiert wird.

2. Verfahren nach Anspruch 1, **dadurch gekennzeichnet,**
**dass** zumindest ein Bilddatensatz (6a,6b) bei bewegtem Fahrzeug erfasst wird.

3. Verfahren nach einem der Ansprüche 1 oder 2, **dadurch gekennzeichnet,**
**dass** zumindest ein Bilddatensatz bei stehendem Fahrzeug erfasst wird.

4. Verfahren nach einem der Ansprüche 1 bis 3, **dadurch gekennzeichnet,**
**dass** für die Bildaufnahme eine einzige Kamera (5) verwendet wird und
**dass** genau zwei Bilddatensätze für die Erstellung des dreidimensionalen Umgebungsmodells verwendet werden.

5. Verfahren nach Anspruch 4, **dadurch gekennzeichnet,**
**dass** beide Bilddatensätze bei bewegtem Fahrzeug aufgenommen werden.

6. Verfahren nach einem der Ansprüche 1 bis 5, **dadurch gekennzeichnet,**
**dass** zumindest die Aufnahme eines Bilddatensatzes durch ein charakteristisches Anzeichen für ein bevorstehendes Anhalten des Kraftfahrzeugs ausgelöst wird.

7. Verfahren nach einem der Ansprüche 1 bis 5, **dadurch gekennzeichnet,**
**dass** zu verschiedenen Zeitpunkten Bilddaten aufgenommen und zwischengespeichert werden und zumindest ein zur Erstellung des dreidimensionalen Umgebungsmodells verwendeter Bilddatensatz aus den zwischengespeicherten Bilddatensätze auswählbar ist.

8. Verfahren nach einem der Ansprüche 1 bis 7, **dadurch gekennzeichnet,**
**dass** die Bewegung bewegter Objekte in der Umgebung des Kraftfahrzeuges anhand des optischen Flusses der entsprechenden Bildpunkte bzw. Modellpunkte abgeschätzt wird.

9. Verfahren nach einem der Ansprüche 1 bis 8, **dadurch gekennzeichnet,**
**dass** Maßnahmen zur Vermeidung einer Kollision zwischen der Fahrzeugtür (2) und einem im Schwenkraum der Fahrzeugtür (2) detektierten Gefahrenobjekt (4) ergriffen werden.

10. Verfahren nach einem der Ansprüche 1 bis 9, **dadurch gekennzeichnet,**
**dass** anhand der aufgenommenen Bilddaten (6a,6b) und/oder anhand von Modelldaten des dreidimensionalen Umgebungsmodells eine Objektklassifikation von Objekten in der Umgebung des Kraftfahrzeugs, insbesondere im Schwenkraum der Fahrzeugtür (2), durchgeführt wird und in Abhängigkeit vom Ergebnis der Objektklassifikation Maßnahmen zum Schutz der Fahrzeugtür ergriffen werden.

## Claims

1. A method for monitoring the pivoting space of a vehicle door (2) on a motor vehicle (3) with regard to the presence of dangerous objects (4), in which image data of a camera (5) arranged at the motor vehicle and oriented to a lateral surrounding region of the motor vehicle is detected, **characterised in that** image data of the camera (5) is recorded at at least two different recording times, **in that** movement information (5, 5a, 5b) of the motor vehicle (3) is detected between the two recording times and **in that** a three-dimensional model of the surroundings is set up using the recorded image data (6a, 6b) and the movement information and analysed with respect to the presence of dangerous objects in the pivoting space of the vehicle door.

2. A method according to claim 1, **characterised in that** at least one set of image data (6a, 6b) is detected with the vehicle moving.

3. A method according to either of claims 1 or 2, **characterised in that** at least one set of image data is detected with the vehicle stationary.

4. A method according to any one of claims 1 to 3, **characterised in that** a single camera (5) is used for recording the image and **in that** precisely two sets of image data are used to set up the three-dimensional model of the surroundings.

5. A method according to claim 4, **characterised in that** the two sets of image data are recorded with the vehicle moving.

6. A method according to any one of claims 1 to 5, **characterised in that** at least the recording of one set of image data is triggered by a characteristic indication for an imminent stopping of the motor vehicle.

7. A method according to any one of claims 1 to 5, **characterised in that** image data is recorded at various times and temporarily stored and at least one set of image data used to set up the three-dimensional model of the environment can be selected from the temporarily stored sets of image data.

8. A method according to any one of claims 1 to 7, **characterised in that** the movement of moved objects in the surroundings of the motor vehicle is estimated using the optical flow of the corresponding image points or model points.

9. A method according to any one of claims 1 to 8, **characterised in that** measures to avoid a collision between the vehicle door (2) and a dangerous object (4) detected in the pivoting space of the vehicle door (2) are taken.

10. A method according to any one of claims 1 to 9, **characterised in that** an object classification of objects in the surroundings of the motor vehicle, more especially in the pivoting space of the vehicle door (2), is carried out using the recorded image data (6a, 6b) and/or using model data of the three-dimensional model of the surroundings, and measures to protect the vehicle door are taken as a function of the result of the object classification.

## Revendications

1. Procédé de surveillance de l'espace de pivotement d'une portière (2) d'un véhicule automobile (3) pour déterminer la présence d'objets à risque (4), selon lequel
on saisit les données d'images d'une caméra (5) installée sur le véhicule et dirigée vers la zone latérale entourant le véhicule,
**caractérisé en ce qu'**
on prend des données d'images de la caméra (5) à au moins deux instants de prise de vue différents,
on saisit l'information de mouvement (5, 5a, 5b) du véhicule (3) entre les deux instants de prise de vue, et
à l'aide des données d'images prises (6a, 6b) et de l'information de mouvement, on établit un modèle tridimensionnel de l'environnement et on l'analyse pour déterminer la présence d'objets à risque dans l'espace de pivotement de la portière du véhicule.

2. Procédé selon la revendication 1,
**caractérisé en ce qu'**
on saisit au moins un jeu de données d'images (6a, 6b) lorsque le véhicule se déplace.

3. Procédé selon la revendication 1 ou 2,
**caractérisé en ce qu'**
on saisit au moins un jeu de données d'images (6a, 6b) lorsque le véhicule est immobile.

4. Procédé selon les revendications 1 à 3,
**caractérisé en ce qu'**
on utilise une seule caméra (5) pour la prise de vue et on utilise précisément deux jeux de données d'images pour établir le modèle tridimensionnel de l'environnement.

5. Procédé selon la revendication 4,
**caractérisé en ce qu'**
on prend les deux jeux de données d'images lorsque le véhicule se déplace.

6. Procédé selon les revendications 1 à 5,
**caractérisé en ce qu'**
on déclenche au moins une prise de vue d'un jeu de données d'images par les signes caractéristiques d'un arrêt prévisible du véhicule.

7. Procédé selon les revendications 1 à 5,
**caractérisé en ce qu'**
on saisit des données d'images à différents instants et on les mémorise de façon intermédiaire et dans les jeux de données d'images enregistrées de façon intermédiaire, on sélectionne un jeu de données d'images utilisable pour établir le modèle tridimensionnel de l'environnement.

8. Procédé selon les revendications 1 à 7,
**caractérisé en ce qu'**
on évalue le mouvement d'objet mobile dans l'environnement du véhicule à l'aide du flux optique des points image correspondants ou des points du modèle.

9. Procédé selon les revendications 1 à 8,
**caractérisé en ce qu'**
on prend des mesures pour éviter une collision entre une portière (2) du véhicule et un objet à risque (4) détecté dans l'espace de pivotement de la portière (2) du véhicule.

10. Procédé selon les revendications 1 à 9,
**caractérisé en ce qu'**
à l'aide des données d'images prises (6a, 6b) et/ou à l'aide des données du modèle tridimensionnel de l'environnement, on effectue une classification des objets dans l'environnement du véhicule notamment dans l'espace de pivotement de la portière (2) du véhicule, et en fonction du résultat de la classification des objets, on prend des mesures pour la protéger.
